# FASCICULE DE BREVET EUROPEEN

(11) **EP 2 619 827 B1**
(45) Date de publication et mention de la délivrance du brevet: **25.02.2015**
(21) Numéro de dépôt: 11752278.9
(22) Date de dépôt: 22.07.2011
(51) Int. Cl.: H01M 4/04, H01M 4/13, H01M 4/139, H01M 4/62, H01M 10/04, H01G 11/06, H01G 11/48, H01M 4/02, H01M 4/131, H01M 4/136, H01M 4/1391, H01M 4/1397, H01M 6/40, H01M 10/0525, H01M 10/0585

(54) **ENCRE AQUEUSE POUR L'IMPRESSION D'ELECTRODES POUR BATTERIES AU LITHIUM**
WÄSSRIGE TINTE ZUM AUFDRÜCKEN VON ELEKTRODEN FÜR LITHIUMBATTERIEN
AQUEOUS INK FOR PRINTING ELECTRODES FOR LITHIUM BATTERIES

(30) Priorité: 22.09.2010 FR 1057593
(43) Date de publication de la demande: 31.07.2013
(73) Titulaire: Commissariat à l'Énergie Atomique et aux Énergies Alternatives, 75015 Paris (FR)
(72) Inventeur: PICARD, Lionel, F-38110 La Tour Du Pin (FR); GIROUD, Nelly, F-42100 Saint Etienne (FR); ROUAULT, Hélène, F-38420 Le Versoud (FR); SOLAN, Sébastien, F-38170 Seyssinet-Pariset (FR)
(74) Mandataire: Cabinet Laurent & Charras
(86) Numéro de dépôt international: PCT/FR2011/051777
(87) Numéro de publication internationale: WO 2012/038628

(56) Documents cités:
- EP-A1- 1 207 572
- WO-A1-2004/079841
- WO-A1-2007/129841
- WO-A2-2004/011901
- JP-A- 2006 085 925
- US-A1- 2003 091 899
- US-A1- 2009 305 132
- A.V. MURUGAN ET AL.: "Electrochemical lithium insertion into a poly(3,4-ethylenedioxythioph ene)PEDOT/V2O5 nanocomposite", JOURNAL OF POWER SOURCES, vol. 105, no. 1, 5 mars 2002 (2002-03-05), pages 1-5, XP004343598, ISSN: 0378-7753, DOI: DOI:10.1016/S0378-7753(01)00992-2
- L.J. HER ET AL.: "Preparation and electrochemical characterizations of poly(3,4-dioxyethylenethiophene)/LiCoO2 composite cathode in lithium-ion battery", JOURNAL OF POWER SOURCES, vol. 157, no. 1, 19 juin 2006 (2006-06-19) , pages 457-463, XP025084053, ISSN: 0378-7753, DOI: DOI:10.1016/J.JPOWSOUR.2005.07.047 [extrait le 2006-06-19]

## Description

### DOMAINE DE L'INVENTION

La présente invention concerne une encre aqueuse comportant un matériau actif et un polymère conducteur hydrosoluble ou hydrodispersable pour la réalisation d'électrodes par impression, notamment pour les batteries lithium secondaires.

Le domaine d'utilisation de la présente invention se rapporte particulièrement aux générateurs électrochimiques au lithium fonctionnant sur le principe d'insertion et de désinsertion (ou intercalation/désintercalation) de lithium sur au moins une électrode.

### ETAT ANTERIEUR DE LA TECHNIQUE

Les batteries lithium, ou Li-ion, présentent une structure comprenant deux électrodes disposées de part et d'autre d'un séparateur organique ou inorganique. Ces deux électrodes, l'une positive et l'autre négative, sont toutes les deux montées sur un collecteur de courant métallique.

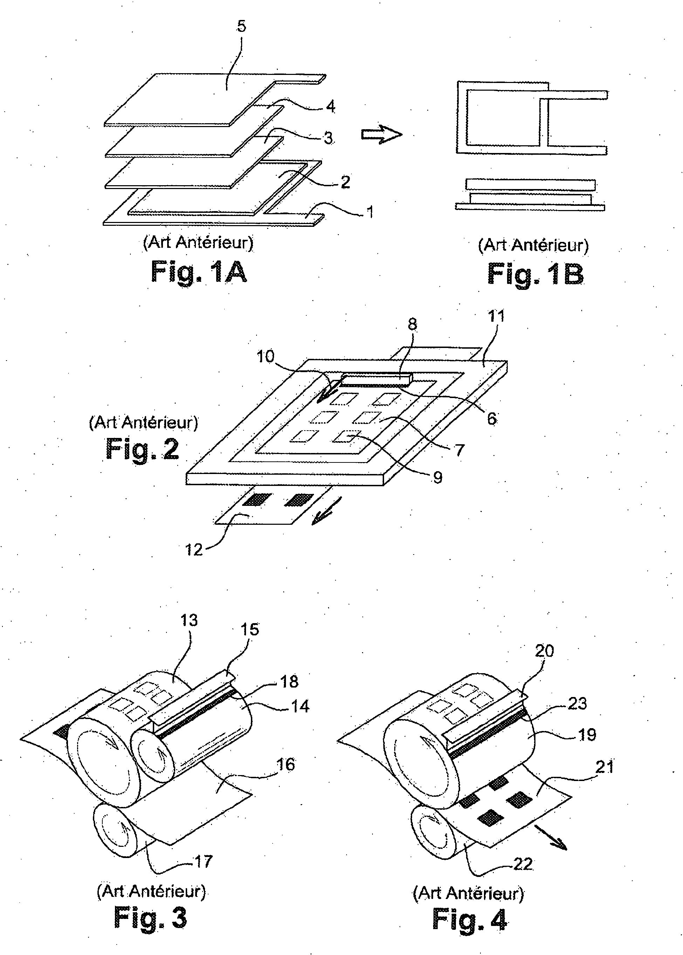

Dans le cas des batteries Li-ion imprimées (figure 1), les différents éléments de la batterie sont imprimés successivement selon les étapes suivantes :
- dépôt d'une première électrode (positive ou négative) sur un premier collecteur de courant métallique ;
- dépôt du séparateur polymère ou céramique sur la première électrode ;
- dépôt de la seconde électrode (positive ou négative, opposée à la première électrode) sur le séparateur ;
- mise en place du second collecteur de courant.

Les batteries imprimées présentent l'avantage d'être flexibles avec une structure cohésive (les différentes couches ne peuvent pas bouger les unes par rapport aux autres) et légères. L'impression d'électrodes peut notamment être réalisée par sérigraphie (figure 2), flexographie (figure 3), héliogravure (figure 4), ou par jet d'encre. Ces techniques d'impression permettent généralement des cadences de production élevées.

Typiquement, les encres d'électrodes contiennent un matériau actif d'électrode, un ou plusieurs conducteur(s) électronique(s) carboné(s), un ou plusieurs liant(s) et un solvant organique.

Le matériau électro-chimiquement actif permet l'insertion et la désinsertion des cations lithium alors que le conducteur électronique permet d'améliorer la conduction de l'électricité. D'autre part, le liant facilite non seulement l'adhésion de la composition de l'encre au collecteur de courant mais il améliore aussi la cohésion du matériau actif.

La mise en forme de certains matériaux actifs tels que le carbone, LiFePO₄ (phosphate de fer lithié) ou encore Li₄Ti₅O₁₂ (oxyde de titane lithié) en voie aqueuse, demande généralement l'utilisation de polymères hydrosolubles comme les dérivés cellulosiques CMC (carboxyméthylcellulose), HMC (hydroxyméthylcellulose), associés à des latex de copolymères tels que le NBr (acrylonitrilebutadiène), le SBr (styrène-butadiène), ou encore le terpolymère éthylène-propylène-diène. Bien que les encres formulées avec ces mélanges de polymères présentent une bonne qualité d'impression d'électrode par flexographie, les batteries comprenant ces électrodes ne sont pas aussi performantes électrochimiquement que les batteries munies d'électrodes formulées en voie organique.

Les caractéristiques physicochimiques des liants polymères utilisés influent sur la tension de surface et le caractère rhéologique des encres, La définition optimale des motifs et la capacité surfacique de l'électrode découlent donc du choix du liant, du matériau actif et de l'extrait sec notamment en sérigraphie. Par ailleurs, dans la flexographie, l'optimisation des différents transferts de l'encre, et la qualité des électrodes en résultant, dépendent de l'ajustement de la tension de surface.

Le PVDF (polyfluorure de vinylidène) compte parmi les liants les plus utilisés dans les électrodes de batteries Li-ion. Cependant, il induit généralement de très faibles valeurs de tension de surface aux encres rendant ainsi l'impression par flexographie très problématique. L'introduction d'un second polymère très polaire comme le PVA (poly(vinylalcool)) permet d'augmenter la tension de surface et donc d'imprimer par flexographie. Cependant, cet ajout entraine des problèmes de stabilité de l'encre à court terme.

Les polymères conducteurs électroniques peuvent être utilisés en remplacement ou en addition de conducteurs électroniques classiques (noir de carbone, fibres de carbone, ...). Par exemple, la polyaniline, les polypyrroles et les polythiophènes, et plus particulièrement le PEDOT (poly(3,4-éthylènedioxythiophène)) souvent associé au PSS (polystyrènesulfonaté) sont principalement utilisés pour leur facilité de mise en oeuvre par rapport aux suspensions de particules conductrices mais aussi pour la possibilité d'améliorer la percolation électrique des matériaux actifs d'électrode.

Le document WO2004/011901 décrit une électrode obtenue par enduction d'une encre comprenant notamment des particules de matériau actif (LiFePO₄) recouvertes d'une couché de matériau conducteur (PEDOT-PSS) et d'un matériau présentant un faible indice de réfraction (polymères fluorés, oxyde de vanadium, polypropylène).

Le document US2009/0095942 décrit la cathode d'une batterie secondaire au lithium contenant un polymère conducteur électrique ayant un groupement amine, un composé de liaisons hydrogène et un acide protonique. Cette électrode est fabriquée par enduction en voie aqueuse.

Le document US7651647 décrit la fabrication de cathodes pour cellules électrochimiques de batteries lithium primaires (batteries non rechargeables). Un matériau actif de cathode (oxyde de vanadium - argent ou carbone fluoré) et un polymère conducteur (polyaniline et/ou polydioxythiophene) sont tout d'abord mélangés sans ajout d'autres liants que le polymère conducteur. Le mélange est ensuite mis en forme pour fabriquer la cathode, (a) soit par frittage de la poudre sur le collecteur de courant, sur lequel peut être déposé au préalable le polymère conducteur, (b) soit par frittage de la poudre sous forme de feuille, laquelle est ensuite déposée sur le collecteur de courant, amenant par conséquent le contact.

Le document JP 2006 085925 A divulgue une suspension aqueuse comprenant du graphite comme matériau actif (98 % en poids) et l'association PEDOT/PSS comme polymère conducteur (1,3 % en poids). Le document US 2009/305132 A1 divulgue une dispersion aqueuse comprenant LiFePO₄ comme matière active et l'association PEDOT/PSS comme polymère conducteur. Cependant, aucun de ces documents ne donne d'indication quant à la viscosité du polymère utilisé.

L'utilisation de PEDOT comme polymère conducteur associé à des matières actives d'électrode (éventuellement en suspension aqueuse) est également décrite dans les documents WO 2007/129841 A1 et EP 1 207 572 A1, ainsi que les articles scientifiques "Journal of Power Sources, vol. 105, no. 1, pages 1-5" et "Journal of Power Sources, vol. 157, no. 1, pages 457-463", mais aucun de ceux-ci ne divulgue l'association de ce polymère avec le polystyrène sulfonaté (PSS) pour la réalisation d'électrodes par impression.

Les documents WO 2004/079841 A1 & US 2003/091899 A1 divulguent des compositions aqueuses pour la préparation d'électrodes, comprenant une matière active et un polymère conducteur hydrosoluble ou hydrodispersable, mais ne décrivent pas l'utilisation de l'association PEDOT/PSS comme polymère conducteur.

Comme déjà indiqué, les techniques impression d'électrodes de batteries Li-ion peuvent présenter des limites. En effet, en flexographie, les capacités surfaciques obtenues en une seule passe sont faibles. De plus, les pressions utilisées pour les différents transferts avec des encres formulées avec des polymères conducteurs électroniques sont faibles (10 à 50N) et dépendent fortement de la dureté du polymère de la forme imprimante.

La capacité surfacique est aussi fortement dépendante de la capacité de chargement de l'anilox, c'est-à-dire de la forme et de la profondeur des motifs présents sur ce dernier. Dans les meilleures conditions de transfert, de différences d'énergies de surface entre l'encre et les différents rouleaux, la quantité d'encre transférée est au mieux le quart de la quantité d'encre présente sur l'anilox.

Dans le cas de l'héliogravure, la quantité d'encre transférée est, typiquement, au mieux la moitié de la quantité d'encre présente sur le cylindre.

Bien que l'art antérieur comporte des encres pour l'impression d'électrodes de batteries Li-ion, ces dernières ne sont pas satisfaisantes. En effet, le matériau actif est souvent associé à un polymère additionnel afin de faciliter sa mise en forme. De plus, certains liants comme le PVDF nécessitent l'ajout d'un polymère très polaire (PVA) afin d'atteindre une tension de surface adaptée aux techniques d'impression. Cette dernière solution reste insatisfaisante, le mélange PVDF/PVA étant instable.

La présente invention concerne une encre aqueuse stable, dont la viscosité permet d'améliorer l'impression d'électrodes de batteries Li-ion par flexographie, héliogravure, ou sérigraphie.

### EXPOSE DE L'INVENTION

Le Demandeur a mis au point une encre aqueuse pour l'impression d'électrodes, dont la formulation comprend un liant polymère conducteur électronique permettant en outre d'augmenter la tension de surface de ladite encre. Cette encre permet d'améliorer les différents transferts lors du procédé d'impression ainsi que l'adhérence de l'électrode sur le collecteur de courant.

Plus précisément, la présente invention concerne une encre aqueuse pour la réalisation d'électrodes par impression, comprenant au moins un matériau actif d'électrode et au moins un polymère conducteur hydrosoluble ou hydrodispersable. Ce polymère est constitué au moins par l'association PEDOT/PSS et présente une viscosité comprise entre 20 et 100 dPa.s.

Comme déjà indiqué, le PEDOT est un polymère poly(3,4-éthylènedioxythiophène) alors que le PSS est un polystyrènesulfonaté. La viscosité de l'association PEDOT/PSS varie selon la nature même de ces polymères.

Le matériau actif d'électrode de l'encre aqueuse selon l'invention peut avantageusement être choisi dans le groupe comprenant les composés suivants: LiFePO₄, LiCoO₂, Li₄Ti₅O₁₂, carbone graphite Si, SiC, LiNiₓCo_{y}Al_{z}O₂ avec x+y+z=1. Comme déjà indiqué, le matériau actif permet l'insertion et la désinsertion des cations lithium.

De manière encore plus avantageuse, le matériau actif d'une électrode positive est le LiFePO₄, alors que le LiTi₅O₁₂ est préféré dans le cas d'une électrode négative.

Contrairement à l'art antérieur, l'encre aqueuse selon la présente invention ne comprend pas nécessairement de conducteurs électroniques carbonés classiques, étant donné que les polymères conducteurs électroniques jouent le double rôle de liant et de conducteur électronique. Le taux de matière active dans l'encre peut ainsi être significativement augmenté. De plus, dans l'encre selon l'invention, le matériau actif n'est pas associé à du PVDF (polyfluorure de vinylidène) qui diminue la tension de surface. Selon un mode de réalisation préféré, l'encre aqueuse selon l'invention comprend un seul conducteur électronique, le PEDOT/PSS.

Selon un mode de réalisation préféré, la quantité de matériau actif d'électrode est comprise entre 25 et 50 % par rapport au poids de l'encre aqueuse selon la présente invention, et encore plus avantageusement entre 40 et 50 %.

L'encre aqueuse selon l'invention comprend en outre au moins un polymère conducteur hydrosoluble, qui assure également la fonction de liant. Il est avantageusement l'association PEDOT/PSS. Selon un mode de réalisation préféré, l'encre aqueuse selon l'invention comprend un seul polymère conducteur hydrosoluble, le PEDOT/PSS.

Le PEDOT/PSS est du poly(3,4-éthylènedioxythiophène) (PEDOT) associé à du polystyrènesulfonaté (PSS) afin de doper sa conductivité. Le ratio PEDOT/PSS est avantageusement compris entre 1/2,5 et 1/1.

De manière avantageuse, la présente invention permet de formuler tous les matériaux actifs actuellement utilisés dans le domaine des batteries Li-ion en voie aqueuse en utilisant comme liant conducteur électronique une dispersion aqueuse visqueuse de PEDOT/PSS.

La quantité de polymère conducteur hydrosoluble ou hydrodispersable est avantageusement comprise entre 1,5 et 4 % par rapport au poids de l'encre aqueuse, et encore plus avantageusement entre 1,5 et 2,5 %.

Comme déjà précisé, le PEDOT/PSS utilisé dans le cadre de la présente invention est un mélange de polymères présentant une viscosité comprise entre 20 et 100 dPa.s. Sa viscosité est avantageusement de l'ordre de 60 dPa.s. Contrairement aux encres de l'art antérieur comprenant du PEDOT/PSS, l'encre aqueuse selon l'invention peut être mise en oeuvre par impression, eu égard à la viscosité du PEDOT/PSS.

De manière avantageuse, la viscosité de l'encre aqueuse selon l'invention est comprise entre 0,1 Pa.s et 25 Pa.s soumis à une vitesse de cisaillement de 12s⁻¹ et encore plus avantageusement entre 0,5 et 15 Pa.s.

L'homme du métier saura ajuster les proportions des constituants de l'encre aqueuse afin d'obtenir la viscosité souhaitée, le comportement rhéologique recherché variant en fonction des techniques d'impression. En effet, alors que la flexographie et l'héliogravure demandent des encres présentant un caractère liquide rhéofluidifiant et présentant un temps de relaxation relativement long, il est préférable d'utiliser des encres plus visqueuses et avec un caractère rhéofluidifiant et présentant un temps de relaxation plus court pour la sérigraphie.

Selon un mode de réalisation particulier de l'invention, l'encre aqueuse peut comprendre en outre au moins un additif choisi parmi des conducteurs électroniques tels que le carbone Super P^{®}, les fibres de carbones.

Selon un autre mode de réalisation particulier, l'encre aqueuse selon la présente invention consiste en au moins un matériau actif d'électrode et du PEDOT/PSS, la viscosité du PEDOT/PSS étant avantageusement comprise entre 20 et 100 dPa.s.

La présente invention concerne également l'utilisation de ladite encre aqueuse pour la réalisation d'une électrode par impression de ladite encre aqueuse sur un collecteur de courant. Ladite électrode peut être positive ou négative.

Le procédé de réalisation de ladite électrode comprend les étapes suivantes :
- dépôt de l'encre aqueuse selon la présente invention sur un collecteur de courant, ledit dépôt étant avantageusement réalisé par impression par jet d'encre, flexographie, héliogravure, ou par sérigraphie ;
- séchage de l'encre ;
- éventuellement compression ou calandrage de l'électrode formée par dépôt de l'encre sur le collecteur de courant.

Le dépôt d'encre peut éventuellement être réalisé par enduction.

De manière avantageuse, le collecteur de courant peut être en aluminium, cuivre ou nickel, voire des alliages de ces métaux. Selon un mode de réalisation préféré, le collecteur de courant de l'électrode positive est en aluminium alors que celui de l'électrode négative est en cuivre.

La présente invention concerne aussi une électrode susceptible d'être obtenue selon le procédé de fabrication ci-dessus.

L'extrait sec de l'encre aqueuse selon l'invention est typiquement compris entre 30 et 60 %. Il représente le pourcentage de matière solide par rapport à l'ensemble des constituants de l'encre.

Comme déjà indiqué, le taux de matière active dans l'encre aqueuse selon l'invention peut être significativement augmenté, permettant ainsi d'obtenir une électrode de capacité massique et volumique supérieure par rapport à l'art antérieur.

De manière avantageuse, la capacité surfacique de l'électrode selon l'invention est supérieure à 3 mAh.cm⁻² pour un régime de charge-décharge supérieur à 2C, soit un temps de charge (ou décharge) de 30 minutes à 6mA pour une batterie avec des électrodes de 1 cm² de surface.

L'invention concerne également un accumulateur lithium comprenant au moins une électrode préparée par dépôt de l'encre selon l'invention, mais aussi une batterie lithium comprenant au moins un accumulateur lithium selon l'invention.

Avantageusement la batterie lithium est une batterie lithium secondaire dans laquelle les électrodes sont typiquement séparées par un séparateur organique ou inorganique. Les électrodes résultant de la présente invention peuvent donner lieu à trois types de batteries dans lesquelles un échange d'ion lithium a lieu entre l'électrode positive et l'électrode négative :
- des sources d'énergie, permettant d'offrir de faibles courants pendant une très longue durée, généralement avec de fortes capacités massique et volumique ;
- des sources de puissance, permettant d'offrir de forts courants pendant un temps assez court, généralement avec de plus faibles capacités massique et volumique ;
- des sources de puissance à forte capacité, permettant d'offrir de forts courants (à défaut de faibles courants) pendant une longue durée, généralement avec de fortes capacités massiques et volumiques.

L'invention et les avantages qui en découlent ressortiront mieux des figures et exemples suivants.

### FIGURES

La figure 1A illustre le principe schématisé de la conception d'une batterie lithium-ion imprimée.
La figuré 1B illustre une batterie assemblée, vue de dessus et vue de côté.
La figure 2 illustre le principe de l'impression par sérigraphie d'électrodes et de membranes pour batteries Li-ion.
La figure 3 illustre le principe de l'impression par flexographie d'électrodes et de membranes pour batteries Li-ion.
La figure 4 illustre le principe de l'impression par héliogravure d'électrodes et de membranes pour batteries Li-ion.

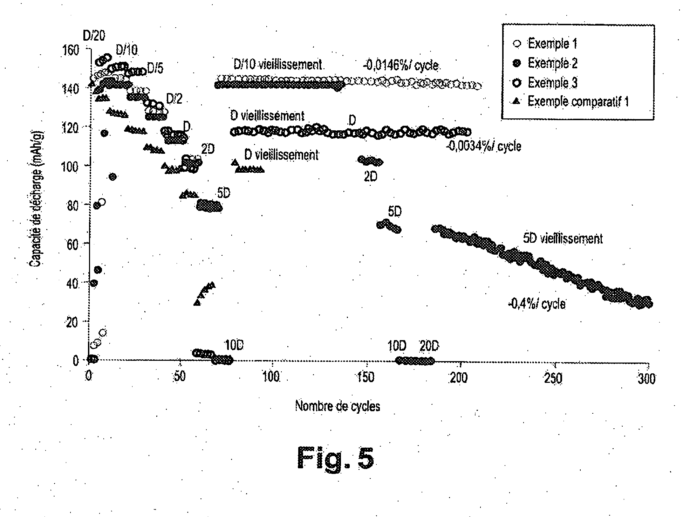

La figure 5 montre les résultats dés tests de cyclage à différents régimes donnant les performances d'électrodes LiFePO₄ / PEDOT-PSS selon l'invention par rapport à une électrode LiFePO₄ selon l'art antérieur.

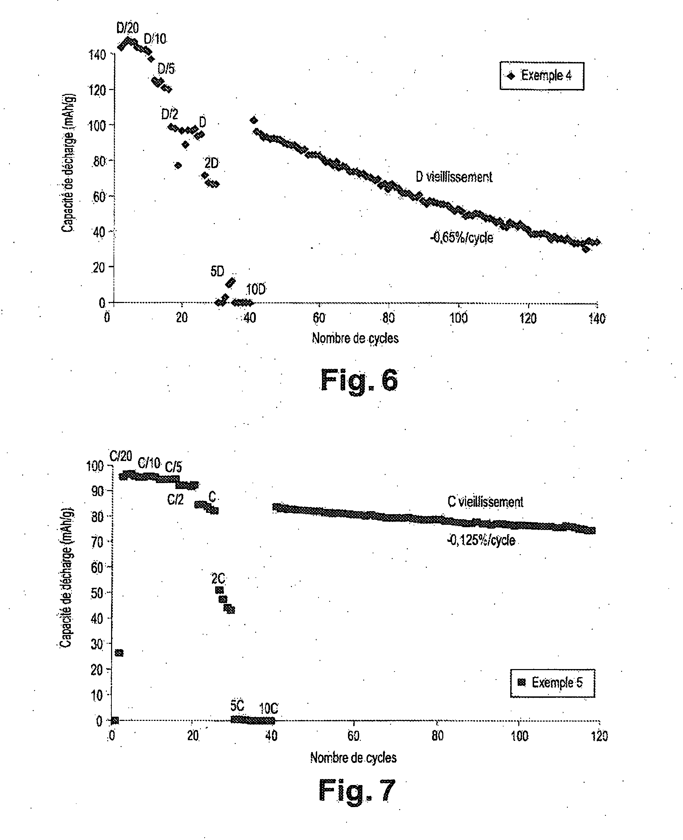

La figure 6 montre les résultats des tests de cyclage à différents régimes donnant la performance d'une électrode LiCoO₂ / PEDOT-PSS, selon l'invention.
La figure 7 montre les résultats des tests de cyclage à différents régimes donnant la performance d'une électrode Li₄Ti₅O₁₂ / PEDOT-PSS, selon l'invention.

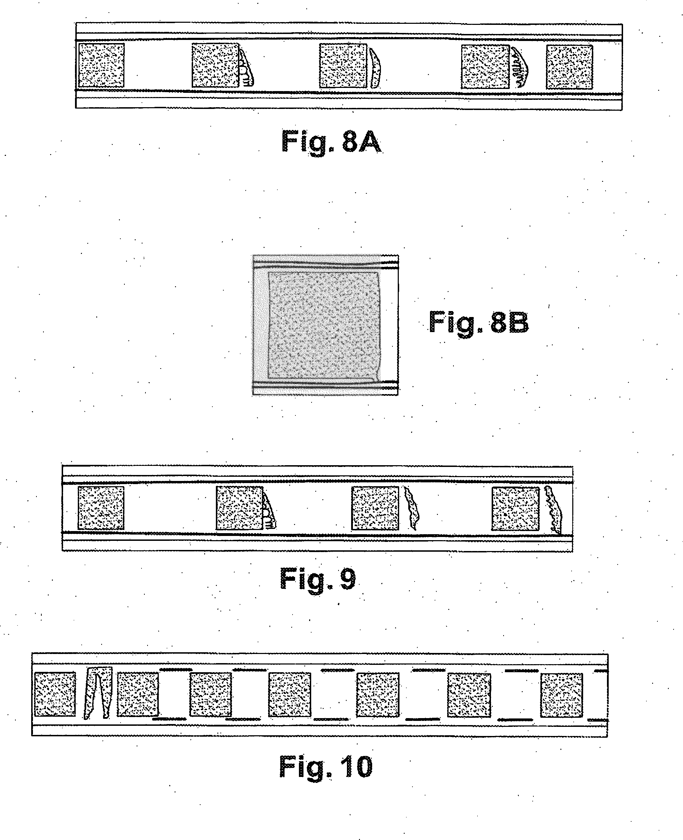

La figure 8a représente une planche d'électrodes imprimées par flexographie d'une encre avec un extrait sec de 45% de l'invention. La figure 8b représente une vue agrandie d'un motif mettant ainsi en évidence la bonne définition des électrodes.
La figure 9 représente une planche d'électrodes imprimées par flexographie d'une encre avec un extrait sec de 40%.
La figure 10 représente une planche d'électrodes imprimées par flexographie d'une encre avec une forme imprimante comportant plus de motifs que la planche illustrée par la figure 8. Elle permet de mettre en évidence l'absence d'encrage entre les électrodes suite au rapprochement des motifs sur la forme imprimante.

### DESCRIPTION DETAILLEE DES FIGURES

La figure 1A illustre le principe schématisé de la conception d'une batterie lithium-ion imprimée. Une première électrode (2) est imprimée sur le premier collecteur de courant (1). Le séparateur (3) est ensuite imprimé sur la première électrode (2). Il permet d'éviter tout court-circuit entre les deux électrodes. La deuxième électrode (4), de charge opposée à la première électrode (2), est imprimée sur le séparateur (3), avant d'être recouverte du deuxième collecteur de courant (5).
La figure 2 illustre le principe de l'impression par sérigraphie d'électrodes et de membranes pour batteries Li-ion. Un cordon d'encre (6) est déposé directement sur le masque (7) reposant lui-même sur un cadre (11). Le cordon d'encre (6) est ensuite poussé par la racle (8) suivant une vitesse réglable (10). La pression appliquée sur la racle est également réglable. Elle permet d'ajuster le réglage de la capacité surfacique dans le cas où les motifs (9) sont des pochoirs, et permet le passage de l'encre (6) à travers les mailles du mesh dans le cas où les motifs (9) sont meshés. La capacité surfacique est réglée dans le cas de la sérigraphie par l'épaisseur du masque (7) et par la dimension et la forme de la maille si les motifs (9) d'impression sont meshés. Cette technique d'impression n'est pas une technique d'impression roll-to-roll mais reel-to-reel, c'est-à-dire semi-continue. Elle est réalisée sur un support d'impression (12).
La figure 3 illustre le principe de l'impression par flexographie. La forme imprimante (13) comprend les motifs en surépaisseur. L'encre est disposée directement sur l'anilox (14), dans un bac encreur ou dans une tête d'encrage. L'anilox est ainsi encré par rotation (cordon d'encre (18)) et une racle (15) est positionnée soit en positif, soit en négatif par rapport au sens de rotation de l'anilox afin d'enlever l'excès d'encre. L'anilox rentre alors en contact avec la forme imprimante et encre les surépaisseurs du rouleau imprimant (le motif) par transfert d'encre. Le rouleau imprimant rentre alors en contact avec le support d'impression (16), qui dans le cas présent, est le collecteur de courant. Un cylindre de contre-pression (17) entre en contact avec le support d'impression (16) afin de contrôler la pression appliquée lors du transfert de l'encre du rouleau encreur au support d'impression (16). Les différentes pressions (pression d'encrage anilox / forme imprimante et pression d'impression forme imprimante / support d'impression) sont réglables et permettent d'ajuster l'épaisseur de dépôt, qui dans le cas de l'impression de batteries Li-ion, permet de régler la capacité surfacique finale de l'électrode, et la définition spatiale du motif d'impression.
La figure 4 illustre le principe de l'impression par héliogravure d'électrodes et de membranes pour batteries Li-ion. Le cylindre métallique gravé (19) de la forme imprimante est encré directement (23), dans un bac encreur ou dans une tête d'encrage. Comme dans le cas de la flexographie, le cylindre est équipé d'un système de racle (20) pour enlever l'excédent d'encre du rouleau. La profondeur de la gravure du cylindre (19) permet de régler la hauteur humide du dépôt et par conséquent la capacité surfacique de l'électrode. Le cylindre encré rentre alors en contact avec le support d'impression (21) qui dans le cas de batteries Li-ion est le collecteur de courant. Par rotation et transfert de l'encre, l'électrode est imprimée. La pression d'impression entre le cylindre encré et le support est apportée par un cylindre de contre pression (22) et est réglable. La pression est dans ce cas aussi relativement faible pour atteindre les capacités surfaciques les plus importantes possible et est fortement dépendante de la dureté du polymère utilisé pour recouvrir le cylindre de contre-pression. Tout comme pour la flexographie, elle est de l'ordre de 10 à 50N. La capacité surfacique sera dépendante de la profondeur du motif gravé. Dans les meilleures conditions de transfert, de différences d'énergies de surface entre l'encre et les différents rouleaux, la quantité d'encre transférée est au mieux la moitié de la quantité d'encre présente sur le cylindre.

### EXEMPLES DE REALISATION DE L'INVENTION

Les exemples 1 à 5 concernent une encre aqueuse selon la présente invention et son utilisation pour fabriquer des électrodes, alors que l'exemple comparatif 1 concerne une encre de l'art antérieur. Les exemples 6 à 8 illustrent l'impression d'électrodes par flexographie de l'encre selon la présente invention.

### Exemple 1

Cet exemple est illustré par la figure 5.

### Matériaux :

Dans cet exemple, le matériau actif utilisé est du LiFePO₄ carboné provenant de Pulead Technology Industry. Le polymère conducteur électronique utilisé est un grade visqueux d'une dispersion de PEDOT-PSS dans l'eau avec des liants additionnels provenant de H.C.Starck Clevios GmbH et commercialisé sous le nom Clevios S V3 (résistivité d'un film imprimé: approx. 700 Ω/sq, viscosité à température ambiante : 60 dPa.s, extrait sec mesuré: 6,5%).

Le polyéthylène utilisé pour séparer les deux électrodes de la pile bouton correspond au grade 2400 de Celgard.

### Réalisation de l'électrode et de la pile bouton :

Une électrode positive est obtenue en mélangeant 93,6 parts en masse de LiFePO₄ Pulead et 6,4 parts en masse de PEDOT-PSS. De l'eau pure, c'est-à-dire déionisée est ensuite ajoutée au mélange pour atteindre un extrait sec de 45,1% en masse.

L'encre est ensuite mélangée à l'aide d'un mélangeur à pales cinétiques à une vitesse de 2000 tours/mn pendant 30min. On obtient une encre dont la viscosité est adaptée à une technique de mise en forme comme la sérigraphie ou l'enduction c'est-à-dire de 6 Pa.s à 12 Pa.s.

L'encre est ensuite enduite sur un collecteur de courant en aluminium à une épaisseur de 150 µm puis séchée à 50°C pendant une journée. Cette hauteur de 150 µm permet d'obtenir une électrode avec une capacité surfacique de 1,16 mAh.cm⁻².

Une pastille de diamètre 14mm est ensuite prélevée dans cette électrode puis elle est compressée sous une pression de 2 tonnes (1,3T.cm⁻²) à l'aide d'une presse. Cette pastille est ensuite séchée à 100°C pendant 48h sous vidé dans un système type Büchi, afin d'enlever les traces résiduelles éventuelles d'eau, avant d'être introduite en boite à gant. Elle est ensuite montée en pile bouton face à une électrode de lithium métal de diamètre 16mm avec comme séparateur polymère, une pastille de 16,5mm de diamètre d'un séparateur en polyéthylène.

### Tests et résultats de charge-décharge de la pile bouton :

La pile bouton subit ensuite différents cycles de charge-décharge à différents régimes entre 2V et 4,2V: 10 cycles à C/20-D/20 ; 10 cycles à C/10-D/10 ; 10 cycles à C/5-D/5 ; 10 cycles à C/5-D/2 ; 10 cycles à C/5-D ; 10 cycles à C/5-2D ; 10 cycles à C/5-5D ; puis un vieillissement en cyclage à C/10-D/10 surplus de 100 cycles.

Les résultats de la capacité de décharge aux différents régimes sont présentés dans la figure 5 et montrent une capacité récupérée de 148mAh.g⁻¹ à D/20 et de 78mAh.g⁻¹ à 5D.

Le vieillissement à D/10 montre une perte de capacité de 2% au bout de 137 cycles (-0,0146% /cycle) avec une capacité récupérée dé l'ordre de 144mAh.g⁻¹. Ces résultats sont excellents au vu des résultats obtenus dans l'exemple comparatif 1.

Une charge à C/20 signifie qu'un courant constant est imposé à la batterie pendant une durée de 20 heures, la valeur du courant étant égale à la capacité divisée par 20. Un cycle 2C correspond à une charge de 30 minutes alors qu'un cycle C-D/5 correspond à une charge d'une heure et une décharge de 5 heures.

### Exemple 2 (figure 5)

Dans cet exemple, la formulation utilisée et les conditions de fabrication de l'électrode et de la pile bouton sont identiques à celles décrites dans l'exemple 1, à la seule différence que la compression appliquée sur l'électrode est de 1 tonne (soit 0,65T/cm²).

La pile bouton subit ensuite le même enchainement de cycles que celui utilisé pour l'exemple 1, à la différence que au bout de 66 cycles de vieillissement à C/10-D/10, une nouvelle série de cycles à différent régimes est appliquée à la pile bouton : 10 cycles à C/5-D ; 10 cycles à C/5-2D ; 10 cycles à C/5-5D ; 10 cycles à C/5-10D ; 10 cycles à C/5-20D ; puis un vieillissement en cyclage à C/5-5D sur plus de 100 cycles.

Les résultats de la capacité de décharge aux différents régimes sont présentés dans la figure 5 et montrent une capacité récupérée de 141mAh.g⁻¹ à D/20, et de 78mAh.g⁻¹ à 5D.

Le vieillissement à D/10 ne montre aucune perte de capacité au bout de 65 cycles avec une capacité récupérée de l'ordre de 142mAh.g⁻¹.

La nouvelle série de cycles à différents régimes réalisée ensuite donnent des résultats identiques à ceux trouvés pour la première série. Le vieillissement à 5D montre une perte de capacité de -0,4% / cycle (-54% de la capacité initiale à 5D sur 115 cycles).

Ces résultats sont excellents au vu des résultats obtenus dans l'exemple comparatif 1 et similaires à ceux obtenus dans l'exemple 1.

### Exemple 3 (figure 5)

Les modes de réalisation de l'électrode et de la pile bouton sont identiques à ceux décrits dans l'exemple 1, selon les paramètres du tableau 1.

La pile bouton subit ensuite différents cycles de charge-décharge à différents régimes entre 2V et 4,2V : 5 cycles à C/20-D/20 ; 5 cycles à C/10-D/10 ; 5 cycles à C/5-D/5 ; 5 cycles à C/5-D/2 ; 5 cycles à C/5-D ; 5 cycles à C/5-2D ; 5 cycles à C/5-5D ; 5 cycles à C/5-10D ; puis un vieillissement en cyclage à C/5-D.

Les résultats de la capacité de décharge aux différents régimes sont présentés dans la figure 5 et montrent une capacité récupérée de 155mAh.g⁻¹ à D/20, de 99mAh.g⁻¹ à 2D mais inférieure à 5mAh.g⁻¹ à 5D. Le vieillissement à D montre une perte de capacité inférieure à 0,5% au bout de 62 cycles (-0,0034% / cycle) avec une capacité récupérée de l'ordre de 118mAh.g⁻¹.

Ces résultats sont excellents au vu des résultats obtenus dans l'exemple comparatif 1 et similaires à ceux obtenus dans l'exemple 1 et dans l'exemple 2. La plus forte capacité récupérée à faible régime provient de la différence de capacité surfacique de l'électrode. Ces résultats montrent aussi qu'une compression de la pastille, même faible semble nécessaire pour un bon fonctionnement à régimes élevés.

### Exemple comparatif 1 (figure 5)

Les modes de réalisation de l'électrode et de la pile bouton sont identiques à ceux décrits dans l'exemple 1, selon les paramètres du tableau 1, ci-après.

Une encre de viscosité de 6 Pa.s à 12 Pa.s est obtenue en mélangeant :
- 82 parts en masse de LiFePO₄ Pulead,
- 4 parts en masse de carbone Super P,
- 6 parts en masse de fibres de carbone VGCF (« *Vapor Generated Carbon Fibers* ») ; et
- 8 parts en masse de polyfluorure de vinylidène PVDF (grade SOLEF®6020 de Solvay) solubilisé à 12% en masse dans la N-methylpyrrolidinone NMP.

De la NMP pure est ensuite ajoutée au mélange pour atteindre un extrait sec de 41,4% en masse.

La pile bouton subit ensuite différents cycles de charge-décharge à différents régimes entre 2V et 4,2V : 5 cycles à C/20-D/20 ; 5 cycles à C/10-D/10 ; 5 cycles à C/5-D/5 ; 5 cycles à C/5-D/2 ; 5 cycles à C/5-D ; 5 cycles à C/5-2D ; 5 cycles à C/5-5D ; 5 cycles à C/5-10D ; puis un vieillissement en cyclage à C/5-D.

Les résultats de la capacité de décharge aux différents régimes sont présentés dans la figure 5 et montrent une capacité récupérée de 135mAh.g⁻¹ à D/20, de 85mAh.g⁻¹ à 2D et de l'ordre de 40mAh.g⁻¹ à 5D.

Le vieillissement à D montre une bonne stabilité avec une capacité récupérée de l'ordre de 98mAh.g⁻¹. Ces résultats montrent que les résultats obtenus avec les électrodes obtenues suivant les exemples 1, 2 et 3 sont excellents.

### Exemple 4 (figure 6)

Les modes de réalisation de l'électrode et de la pile bouton sont identiques à ceux décrits dans l'exemple 1, selon les paramètres du tableau 1.

La pile bouton subit ensuite différents cycles de charge-décharge à différents régimes entre 2,5V et 4,25V : 5 cycles à C/20-D/20 ; 5 cycles à C/10-D/10 ; 5 cycles à C/5-D/5 ; 5 cycles à C/5-D/2 ; 5 cycles à C/5-D ; 5 cycles à C/5-2D ; 5 cycles à C/5-5D ; 5 cycles à C/5-10D ; puis un vieillissement en cyclage à C/5-D.

Les résultats de la capacité de décharge aux différents régimes sont présentés dans la figure 6 et montrent une capacité récupérée de 147mAh.g⁻¹ à D/20 et de 67mAh.g⁻¹ à 2D mais inférieure à 12mAh.g⁻¹ à 5D.

Le vieillissement à D montre une perte de capacité 70% au bout de 100 cycles (-0,6% / cycle). Ces résultats prouvent que la mise en forme de ce matériau est possible en voie aqueuse avec le PEDOT/PSS en tant que liant et qu'il est possible de récupérer toute la capacité en décharge à faible régime.

### Exemple 5 (figure 7)

Les modes de réalisation de l'électrode et de la pile bouton sont identiques à ceux décrits dans l'exemple 1, selon les paramètres du tableau 1.

La pile bouton subit ensuite différents cycles de charge-décharge à différents régimes entre 1V et 2,8V : 5 cycles à C/20-D/20 ; 5 cycles à C/10-D/10 ; 5 cycles à C/5-D/5 ; 5 cycles à C/2-D/5 ; 5 cycles à C-D/5 ; 5 cycles à 2C-D/5 ; 5 cycles à 5C-D/5 ; 5 cycles à 10C-D/5 ; puis un vieillissement en cyclage à C-D/5.

Les résultats de la capacité de charge aux différents régimes sont présentés dans la figure 7 et montrent une capacité récupérée de 96mAh.g⁻¹ à C/20 et de 45mAh.g⁻¹ à 2C mais inférieure à 1mAh.g⁻¹ à 5C.

Le vieillissement à C montre une perte de capacité 11% au bout de 77 cycles (-0,125% / cycle). Ces résultats prouvent que l'utilisation du PEDOT-PSS pour les électrodes négatives est possible. La capacité récupérée à faible régime n'est pas complète et ce phénomène peut provenir de la trop forte compression appliquée sur l'électrode.

### Exemple 6 (figure 8)

Cet exemple prouve la possibilité d'imprimer par flexographie des encres formulées avec le PEDOT-PSS utilisé dans les exemples 1 à 5.

Une encre est obtenue selon la méthode présentée dans les exemples 1 et 2 avec un extrait sec de 45%. 5ml de cette encre est déposée sur la surface d'un anilox de capacité 100cm³ avec un motif strié à 45°. La racle, montée en positif, vient alors dispenser l'encre sur toute la surface de l'anilox. L'anilox rentre ensuite en contact avec la forme imprimante, dont le matériau de surface est un polymère photoréticulable.

Les motifs en surépaisseur sont alors encrés par pression de 10N appliquée entre l'anilox et la forme imprimante.

La forme imprimante rentre ensuite en contact avec le support d'impression (bande d'aluminium d'épaisseur 20µm). La pression exercée entre le cylindre de contre-pression et la forme imprimante (le support d'Al est entre les deux) est de 20N.

L'encre se transfère de façon tout à fait correcte, cependant quelques bavures apparaissent entre les motifs. Elles sont probablement dues à une trop forte quantité d'encre sur l'anilox, qui a par conséquent encré entre les motifs en surépaisseur.

Avec cet anilox de 100cm³, dans les meilleures conditions de transfert, l'épaisseur du dépôt humide doit théoriquement attendre. 25µm, qui avec un extrait sec de 45% donne théoriquement une épaisseur finale d'électrode d'environ 12µm.

Les électrodes réalisées présentent une épaisseur de 11,5µm en moyenne (figures 8a et 8b), indiquant un taux de transfert de 98%. La formulation aqueuse de LiFePO₄ et de PEDOT-PSS présente donc une énergie de surface parfaitement adaptée pour les différents transferts en flexographie.

### Exemple 7 (figure 9)

Une encre similaire à celle de l'exemple 6 mais avec un extrait sec de 40% donne des électrodes dont l'épaisseur après séchage est de 9,7µm en moyenne, correspondant à un taux de transfert de l'encre de 97% par rapport à la théorie.

### Exemple 8 (figure 10)

L'encre utilisée dans cet exemple est parfaitement identique à celle de l'exemple 6. Une modification a été apportée sur la forme imprimante: les motifs sont plus rapprochés ce qui permet de limiter le phénomène observé dans les exemples 6 et 7 d'encrage entre les motifs, mais le matériau est le même. La définition spatiale des électrodes est ainsi considérablement améliorée. Le taux de transfert est de qualité comparable à celui de l'exemple 6.

**Tableau 1 : Composition des encres et capacité surfacique des électrodes.**

| Exemple | 1 | 2 | 3 | Exemple comparatif 1 | 4 | 5 |
|---|---|---|---|---|---|---|
| Type d'électrode | positive | positive | positive | positive | positive | négative |
| Composition de l'encre | LiFePO₄ (93,6) | LiFePO₄ (93,6) | LiFePO₄ (90) | LiFePO₄ (82) | LiCoO₂ (95)^{(a)} | Li₄Ti₅O₁₂ (95)^{(b)} |
| | | | | VGCF (6) | | |
| | | | | PVDF (8) | | |
| | PEDOT-PSS (6,4) | PEDOT-PSS (6,4) | PEDOT-PSS (10) | C super P (4) | PEDOT-PSS (5) | PEDOT-PSS (5) |
| Solvant | eau | eau | eau | NMP | eau | eau |
| Extrait sec (% en masse) | 45,1 | 45,1 | 30,7 | 41,4 | 52 | 52 |
| Mélange de l'encre | 2000rpm 30 min | 2000rpm 30 min | 800rpm 15 min | 800rpm 10 min | 800rpm 10 min | manuel |
| Capacité surfacique (mAh.cm⁻²) | 1,16 | 1,16 | 0,38 | 0,89 | 1,3 | 1,87 |
| Pression (T) | 2 | 1 | - | - | - | 15 |

| | | | | | | |
|---|---|---|---|---|---|---|
| ^{(a)} LiCoO₂ provenant d'Itochu Corporation (grade 8 G avec un diamètre moyen de particule de 30µm) ^{(b)} Li₄Ti₅O₁₂ provenant d'Altaïr-Nano | | | | | | |

## Revendications

1. Encre aqueuse, pour la réalisation d'électrodes par impression, comprenant au moins un matériau actif d'électrode et au moins un polymère conducteur hydrosoluble ou hydrodispersable, ledit polymère étant constitué au moins par l'association PEDOT/PSS dont la viscosité est comprise entre 20 et 100 dPa.s.

2. Encre aqueuse selon la revendication 1, ***caractérisée* en ce que** le matériau actif d'électrode est choisi dans le groupe comprenant le LiFePO₄, LiCoO₂, Li₄Ti₅O₁₂, Carbone graphite, Si, SiC, LiNiₓCo_{y}Al_{z}O₂ avec x+y+z=1.

3. Encre aqueuse selon la revendication 1 ou 2, ***caractérisée* en ce que** la viscosité du polymère conducteur hydrosoluble ou hydrodispersable est de l'ordre de 60 dPa.s.

4. Encre aqueuse selon l'une des revendications précédentes, ***caractérisée* en ce que** la viscosité de l'encre aqueuse est comprise entre 0,1 Pa.s et 25 Pa.s, et encore plus avantageusement entre 0,5 et 15 Pa.s.

5. Encre aqueuse selon l'une des revendications précédentes, ***caractérisée* en ce que** la quantité de matériau actif d'électrode est comprise entre 25 et 50 % par rapport au poids de l'encre aqueuse, plus avantageusement entre 40 et 50 %.

6. Encre aqueuse selon l'une des revendications précédentes, ***caractérisée* en ce que** la quantité de polymère conducteur hydrosoluble ou hydrodispersable est comprise entre 1,5 et 4 % par rapport au poids de l'encre aqueuse, plus avantageusement entre 1,5 et 2,5 %.

7. Encre aqueuse selon l'une des revendications précédentes, ***caractérisée* en ce que** l'encre aqueuse comprend en outre au moins un additif choisi dans le groupe comprenant : les conducteurs électroniques tels que les fibres dé carbone.

8. Utilisation d'une encre aqueuse selon l'une des revendications 1 à 7 pour la réalisation d'une électrode positive ou négative, par impression de ladite encre aqueuse sur un collecteur de courant.

9. Procédé de réalisation d'une électrode comportant les étapes suivantes :
- dépôt d'une encre aqueuse selon l'une des revendications 1 à 7 sur un collecteur de courant, ledit dépôt étant avantageusement réalisé par impression par jet d'encre, flexographie, héliogravure ou par sérigraphie ;
- séchage de l'encre.

10. Procédé de réalisation d'une électrode selon la revendication 9, comportant en outre une étape de compression ou de calandrage de l'électrode formée par dépôt de l'encre sur le collecteur de courant.

11. Electrode obtenue selon l'une des revendications 9 et 10.

12. Electrode selon la revendication 11, ***caractérisée* en ce que** sa capacité surfacique est supérieure à 3 mAh.cm⁻² pour un régime de charge-décharge supérieur à 2C.

13. Accumulateur lithium comprenant au moins une électrode selon l'une des revendications 11 et 12.

14. Batterie lithium comprenant au moins un accumulateur selon la revendication 13.

## Patentansprüche

1. Wässrige Tinte zur Herstellung von Elektroden durch Aufdrucken, mindestens ein elektrodenaktives Material und mindestens ein wasserlösliches oder wasserdispergierbares leitendes Polymer umfassend, wobei das Polymer zumindest durch die Verbindung PEDOT/PSS gebildet ist, deren Viskosität zwischen 20 und 100 dPa·s beträgt.

2. Wässrige Tinte nach Anspruch 1, **dadurch gekennzeichnet, dass** das elektrodenaktive Material aus der Gruppe ausgewählt ist, die LiFePO₄, LiCoO₂, Li₄Ti₅O₁₂, Graphitkohlenstoff, Si, SiC, LiNiₓCo_{y}Al_{z}O₂ umfasst, wobei x+y+z=1 ist.

3. Wässrige Tinte nach Anspruch 1 oder 2, **dadurch gekennzeichnet, dass** die Viskosität des wasserlöslichen oder wasserdispergierbaren leitenden Polymers in der Größenordnung von 60 dPa·s liegt.

4. Wässrige Tinte nach einem der vorhergehenden Ansprüche, **dadurch gekennzeichnet, dass** die Viskosität der wässrigen Tinte zwischen 0,1 Pa·s und 25 Pa·s und noch vorteilhafter zwischen 0,5 und 15 Pa·s beträgt.

5. Wässrige Tinte nach einem der vorhergehenden Ansprüche, **dadurch gekennzeichnet, dass** die Menge an elektrodenaktivem Material zwischen 25 und 50 % bezogen auf das Gewicht der wässrigen Tinte, vorteilhafter zwischen 40 und 50% beträgt.

6. Wässrige Tinte nach einem der vorhergehenden Ansprüche, **dadurch gekennzeichnet, dass** die Menge an wasserlöslichem oder wasserdispergierbarem leitenden Polymer zwischen 1,5 und 4% bezogen auf das Gewicht der wässrigen Tinte, vorteilhafter zwischen 1,5 und 2,5% beträgt.

7. Wässrige Tinte nach einem der vorhergehenden Ansprüche, **dadurch gekennzeichnet, dass** die wässrige Tinte darüber hinaus mindestens ein Additiv umfasst, das aus der Gruppe ausgewählt ist, die umfasst: elektronische Leiter wie etwa Kohlenstofffasern.

8. Verwendung einer wässrigen Tinte nach einem der Ansprüche 1 bis 7 zur Herstellung einer positiven oder negativen Elektrode durch Aufdrucken der wässrigen Tinte auf einen Stromkollektor.

9. Verfahren zur Herstellung einer Elektrode, die folgenden Schritte umfassend:
- Abscheiden einer wässrigen Tinte nach einem der Ansprüche 1 bis 7 auf einem Stromkollektor, wobei die Abscheidung vorteilhafter Weise durch Tintenstrahlaufdruck, Flexodruck, Tiefdruck oder Siebdruck erfolgt;
- Trocknen der Tinte.

10. Verfahren zur Herstellung einer Elektrode nach Anspruch 9, darüber hinaus einen Schritt der Kompression oder Kalandrierung der durch Abscheiden der Tinte auf dem Stromkollektor ausgebildeten Elektrode umfassend.

11. Elektrode, die nach einem der Ansprüche 9 und 10 erhalten ist.

12. Elektrode nach Anspruch 11, **dadurch gekennzeichnet, dass** ihre Oberflächenkapazität bei einem Ladungs-/Entladungszustand von über 2C über 3 mAh·cm⁻² beträgt.

13. Lithiumakkumulator, mindestens eine Elektrode nach einem der Ansprüche 11 und 12 umfassend.

14. Lithiumbatterie, mindestens einen Akkumulator nach Anspruch 13 umfassend.

## Claims

1. An aqueous ink for the forming of electrodes by printing, comprising at least one active electrode material and at least one water-soluble or water-dispersible conductive polymer, said polymer being made at least of the PEDOT/PSS association having a viscosity ranging between 20 and 100 dPa.s.

2. The aqueous ink of claim 1, **characterized in that** the active electrode material is selected from the group comprising LiFePO₄, LiCoO₂, Li₄Ti₅O₁₂, graphite carbon, Si, SiC, LiNiₓCo_{y}Al_{z}O₂ with x+y+z=1.

3. The aqueous ink of claim 1 or 2, **characterized in that** the viscosity of the water-soluble or water-dispersible conductive polymer is on the order of 60 dPa.s.

4. The aqueous ink of any of the foregoing claims, **characterized in that** the viscosity of the aqueous ink ranges between 0.1 Pa.s and 25 Pa.s, and more advantageously still between 0.5 and 15 Pa.s.

5. The aqueous ink of any of the foregoing claims, **characterized in that** the quantity of active electrode material ranges between 25 and 50% with respect to the weight of the aqueous ink, more advantageously between 40 and 50%.

6. The aqueous ink of any of the foregoing claims, **characterized in that** the quantity of water-soluble or water-dispersible conductive polymer ranges between 1.5 and 4 % with respect to the weight of the aqueous ink, more advantageously between 1.5 and 2.5 %.

7. The aqueous ink of any of the foregoing claims, **characterized in that** the aqueous ink further comprises at least one additive selected from the group comprising:
electronic conductors such as carbon fibers.

8. A use of the aqueous ink of any of claims 1 to 7 for the forming of a positive or negative electrode, by printing of said aqueous ink on a current collector.

9. A method for manufacturing an electrode comprising the steps of:
▪ depositing the aqueous ink of any of claims 1 to 7 on a current collector, said deposition being advantageously performed by inkjet printing, flexography, rotogravure, or by screen printing;
▪ drying the ink.

10. A method for forming the electrode of claim 9, further comprising a step of compressing or calendering the electrode formed by deposition of the ink on the current collector.

11. An electrode obtained according to any of claims 9 and 10.

12. The electrode of claim 11, **characterized in that** its area capacity is greater than 3 mAh.cm⁻² for a charge-discharge rate greater than 2C.

13. A lithium accumulator comprising at least one electrode of any of claims 11 and 12.

14. A lithium battery comprising at least one accumulator of claim 13.
